# EUROPEAN PATENT SPECIFICATION

(11) **EP 4 074 968 B1**
(45) Date of publication and mention of the grant of the patent: **09.04.2025**
(21) Application number: 20848688.6
(22) Date of filing: 11.12.2020
(51) Int. Cl.: F04B 39/00, F04B 39/02, F04B 39/12

(54) **RECIPROCATING HERMETIC COMPRESSOR WITH AXIAL FLUX MOTOR**
HERMETISCHER HUBKOLBENVERDICHTER MIT SCHEIBENLÄUFERMOTOR
COMPRESSEUR HERMÉTIQUE ALTERNATIF AVEC MOTEUR À FLUX AXIAL

(30) Priority: 11.12.2019 BR 102019026307; 11.12.2019 BR 102019026308; 11.12.2019 BR 102019026310; 11.12.2019 BR 102019026312; 11.12.2019 BR 102019026313
(43) Date of publication of application: 19.10.2022
(73) Proprietor: NIDEC GLOBAL APPLIANCE BRASIL LTDA., 89219-100 Joinville - SC (BR)
(72) Inventor: MANKE, Adilson Luiz, Saguacú 89221-103 Joinville, SC (BR); ESPÍNDOLA, Aleandro Amauri, 89216-670 Joinville, SC (BR); KREMER, Rodrigo, 89040-260 Blumenau, SC (BR); FELDMANN, Alberto Bruno, 89221-570 Joinville, SC (BR); STAUDT, Tiago, 89204-420 Joinville, SC (BR); PUFF, Rinaldo, 89220-160 Joinville, SC (BR)
(74) Representative: Modiano, Gabriella Diana
(86) International application number: PCT/BR2020/050540
(87) International publication number: WO 2021/113943

(56) References cited:
- WO-A1-2015/078532
- CN-U- 203 962 324
- US-A- 2 797 857
- US-A- 4 401 419
- US-A1- 2017 204 753
- US-A1- 2019 242 393

## Description

### Technical Field

The present invention relates to hermetic reciprocating compressors, preferably used in refrigeration systems, adapted to comprise, as a driving source, an axial flux electric motor.

More specifically, the present invention refers to the arrangement of the bearings necessary for the implementation of an axial flux electric motor in a hermetic reciprocating compressor and the arrangement of the rotor, in relation to the block and stator. The present invention also relates to the electric motor support arrangement for reciprocating compressor, said arrangement supports an axial flux electric motor within the hermetic housing of a compressor. In addition, the present invention also relates to the mounting of the extender element (which integrates the lubricating oil pump) between the lower end of the rotating shaft and the rotor of said axial flux electric motor.

### Background of the Invention

The current state of the art comprises a wide range of reciprocating compressor constructions, which are widely used in refrigeration fluid compressors. In general, a reciprocating compressor has the main objective of achieving alternating suction and discharge cycles of any working fluid, and in the case of refrigeration fluid compressors, the reciprocating compressor cooperates with valves that, acting in sync with the alternating suction and discharge cycles of said reciprocating compressor, allow the discharge fluid to reach a pressure higher than the pressure of the suction fluid.

The functional principle of refrigeration compressors based on reciprocating compressors is widely known in the state of the art.

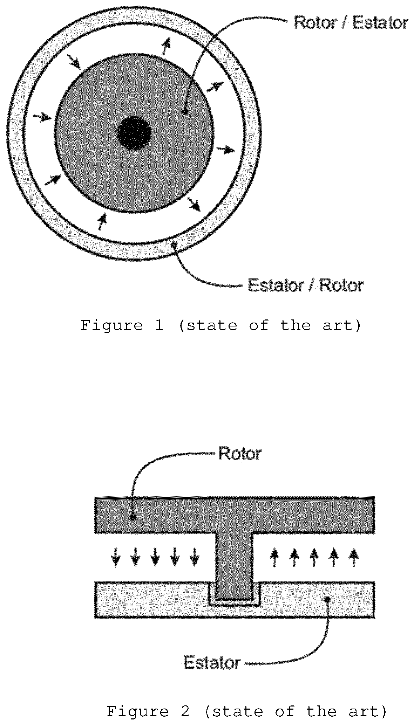

As a rule, the driving force element capable of moving the movable piston comprises an electric motor with radial flux, which is schematically illustrated in figure 1 of the state of the art.

In this sense, an electric motor with radial flux is fundamentally integrated by a rotor and a stator, which are built in order to establish electromagnetic interaction. Topologies in which the rotor is circularly surrounded by the stator and topologies in which the stator is circularly surrounded by the rotor are known, and in both, the rotating magnetic field between the rotor and the stator (see illustrative arrows in figure 1) is generated between the physical radial spacing (clearance) between said rotor and said stator.

Naturally, an electric motor with radial fluw can be easily associated with a reciprocating compressor.

On the other hand, recent technological advances in the area of motors have been able to optimize electric motors with axial flux, so that they have become more energy efficient than those with radial fluw. A basic construction of an axial flux electric motor can be seen in figure 2 of the state of the art.

In general, an axial flux electric motor is fundamentally integrated by a rotor and a stator, which are built in order to establish electromagnetic interaction. Topologies are known in which the rotor is disposed above the stator and topologies in which the stator is disposed above the rotor, and in both, the rotating magnetic field between the rotor and the stator (see illustrative arrows in figure 2) is generated between the axial physical spacing (clearance) between said rotor and said stator.

The document US 2797857, published on July 02, 1957, discloses a motor-compressor unit, and more specifically to a hermetic motor-compressor unit for use in a refrigeration system wherein the motor is of the axial air-gap type.

The document US 2015078532, published on July 04, 2015, discloses an apparatus generating distributed x-ray, in particular to an external thermionic cathode distributed x-ray apparatus generating x-ray altering the position of focus in a predetermined order in a x-ray light source device by arranging a plurality of independent thermionic cathode electron transmitting units via an external approach and by cathode control or grid control and a CT device having the external thermionic cathode distributed x-ray apparatus.

The document US 4401419, published on August 30, 1983, discloses a motor-compressor for a refrigerator including a housing containing a lubricant and a reciprocating compressor driven by a direct-current electric motor having a disc-shaped rotor and stator. The stator is located between magnetic flux closing discs of the rotor and carries electronically commutated drive coils. Goniometric indicators detect the position of the rotor and cause signals to be applied to an alternating current generator which modulates a bridge circuit to provide current flux for driving the rotor.

A problem of the state of the art is the fact that because they comprise topologies essentially different from the radial flux electric motor topologies, the axial flux electric motors are not used in reciprocating compressors, after all, numerous technical adaptations would be necessary in a reciprocating compressor so that it comes to comprise, as a driving force element, an axial flux electric motor.

Another problem of the state of the art is the fact that, unlike what occurs in radial flux electric motors, in which the electromagnetic integration between stator and rotor generates rotating (torque) and radial magnetic forces in the rotor, axial flux electric motors are also subject, in addition to the rotating magnetic force (torque) on the rotor, to a magnetic attraction force, in axial direction, between the rotor and the stator. This means that a rotating shaft linked to the rotor of an axial flux electric motor also tends to undergo, in addition to the rotary movement, an axial displacement. Accordingly, because it comprises this other vector of displacement force between rotor and stator, axial flux electric motors are not applied in reciprocating compressors, after all, the traditional embodiments of reciprocating compressors do not include mechanical elements capable of forming the mounting axial clearances of the shaft and rotor subset in the block and stator subset and handle the axial movement of the rotary shaft under transport and compressor operation conditions.

### Summary

An objective of the present invention is to provide reciprocating compressor with axial flux motor.

This objective is achieved by means of a reciprocating compressor, comprising:
a crankcase;
a rotating shaft comprising at least one inner axial channel, said inner axial channel connected to at least one inner radial channel or to a crankpin;
the crankpin is associated with a connecting rod, and the connecting rod is associated with a movable piston within a compression cylinder; and
an oil pump,
an axial flux electric motor comprising a rotor, with magnets, and a stator with coils;
wherein the rotor and the stator are fixed to the shaft and to the crankcase, respectively, by means of bearings or fixing arrangements;
wherein the stator is located between the crankcase and the rotor, and said rotor and stator are separated by a first axial clearance;
wherein the shaft and crankcase are separated by a second lower axial clearance;
characterized in that:
   the first clearance and the second lower axial clearance are adjustable using by displacing a bushing disposed between the rotor and the rotating shaft.

One of the advantages of the present invention is the fact that it provides a reciprocating compressor comprising an axial flux motor.

The reciprocating compressor according to the present invention consists of the fact that the stator is located between the crankcase and the rotor.

The reciprocating compressor according to the present invention also consists of the fact that the rotor is located between the crankcase and the stator.

In addition, the reciprocating compressor according to the present invention consists of the fact that the rotor is fixed to the rotating shaft by means of a first fixing arrangement.

Additionally, the reciprocating compressor according to the present invention consists of the fact that the stator is fixed to the crankcase by means of a second fixing arrangement.

The reciprocating compressor according to the present invention further comprises an axial bearing disposed between the lower region of the upper flange of the rotating shaft and the upper region of the crankcase.

In addition, the reciprocating compressor according to the present invention further comprises an axial bearing disposed between the rotor and the stator.

In addition, the reciprocating compressor according to the present invention consists of the fact that the stator further comprises a radial bearing arranged around the rotating shaft, wherein the radial bearing is defined by an annular structure which, projected from the stator, is arranged around a segment of the rotating shaft.

The reciprocating compressor according to the present invention further comprises a extended bearing hub.

Additionally, the reciprocating compressor according to the present invention comprises an axial bearing disposed between the rotor and the extended bearing hub.

It is also disclosed, a reciprocating compressor, which does not form part of the present invention, comprising:
a crankcase comprising a crankcase upper part and a crankcase lower part;
the crankcase further comprising a first through hole and a second through hole;
a rotating shaft with a rotating shaft first part located in the first through hole and with a rotating shaft second part located in the second through hole;
the rotating shaft comprising an eccentric pin disposed between the first part and the second part,
the eccentric pin being associated with a connecting rod, and the connecting rod being associated with a movable piston inside a compression cylinder; and
an oil pump,
comprising:
   an axial flux electric motor comprising a rotor with magnets and a stator with electric coils;
   wherein the rotor and the stator are fixed to the rotating shaft and to the crankcase, respectively, by means of bearings or fixing arrangements.

Conveniently, the reciprocating compressor consists of the fact that the rotor is fixed to the rotating shaft by means of a first fixing arrangement.

The reciprocating compressor also consists of the fact that the stator is fixed to the crankcase by means of a second fixing arrangement.

In addition, the reciprocating compressor further comprises a first hydrodynamic radial bearing formed in the space between the inner face of the first through hole and the rotating shaft first part.

Additionally, the reciprocating compressor further comprises a second hydrodynamic radial bearing formed in the space between the inner face of the second through hole and the rotating shaft second part.

Reciprocating compressor in which the stator further comprises an axial bearing disposed around the rotating shaft, wherein the axial bearing is defined by an annular structure which, protruding from the stator, is disposed around of a rotating shaft segment.

The reciprocating compressor further comprises an axial bearing disposed between the eccentric pin and the crankcase upper part.

Additionally, the reciprocating compressor according to the present invention further comprises an axial bearing disposed between the bearing hub and the rotor.

In addition, the reciprocating compressor also consists of the fact that the rotor is above the stator, and the rotor comprises a support structure in "Z" format for fixing to the rotating shaft.

In addition, the reciprocating compressor consists of the rotor and stator are separated by a first axial clearance, and the rotor and crankcase are separated by a second axial clearance.

Additionally, the reciprocating compressor consists of the first clearance is adjustable by using a bushing arranged between the stator and the crankcase or between the rotor and the rotating shaft.

Further, the reciprocating compressor consists of the fact that the second clearance is preferably adjustable by means of a bushing arranged between the rotor and the rotating shaft.

The reciprocating compressor according to the present invention also consists of the fact that the first clearance is formed by the displacement of the rotor or stator and the second clearance is generated through the displacement of a bushing or fixing arrangement.

Additionally, the reciprocating compressor according to the present invention further comprises an oil pump provided in the inner axial channel of the rotating shaft; or provided in the rotor.

In addition, the reciprocating compressor according to the present invention further comprises a fastening means that physically links the oil pump, the rotor and the rotating shaft.

An additional advantage of the method according to the present invention is to provide a simple and practical reciprocating compressor, of significantly reduced dimensions in relation to a radial engine reciprocating compressor, with adjustments of its axial clearances independently, allowing an easy industrial production and generating a robust configuration for transport and operation operations.

### Brief Description of Drawings

The objectives and advantages of the present invention will become clearer through the following detailed description of the examples and non-limiting drawings presented at the end of this document:
Figure 1 illustrates a simplified view of the state of the art of a radial flux motor.
Figure 2 illustrates a simplified view of the state of the art of an axial flux motor.
Figure 3 illustrates an internal side view of a reciprocating compressor with axial flux motor, which does not form part of the present invention.
Figure 4 illustrates another internal side view of a reciprocating compressor with axial flux motor, which does not form part of the invention.
Figure 5 illustrates another internal side view of a reciprocating compressor with axial flux motor, which does not form part of the invention.
Figure 6 illustrates an internal side view of a reciprocating compressor with axial flux motor, which does not form part of the present invention.
Figure 7 illustrates another possible configuration (which does not form part of the present invention) of a reciprocating compressor with axial flux motor according to the present invention.
Figure 8 illustrates a possible change in the reciprocating compressor with axial flux motor, which does not form part of the present invention.
Figure 9 illustrates another possible change in the reciprocating compressor with axial flux motor according to the present invention.
Figure 10 illustrates a further change in the reciprocating compressor with axial flux motor according to the present invention.

### Detailed Description

### [First Embodiment]

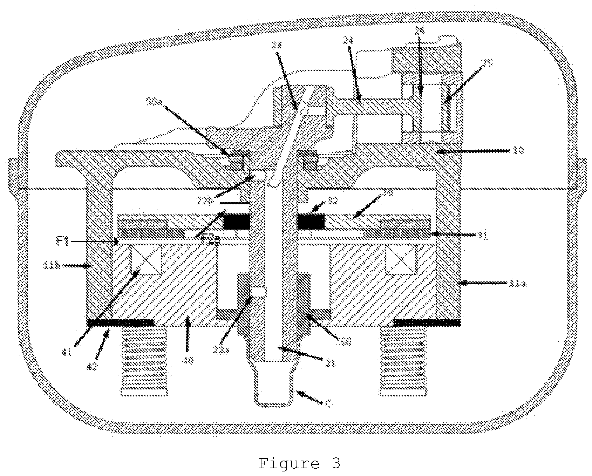

Figure 3, not part of the invention, illustrates a first embodiment of the reciprocating compressor with axial flux motor according to the present invention.

According to Figure 3, the reciprocating compressor comprises a crankcase 10, a rotating shaft 20, an oil pump C and an electric motor with axial flux basically composed of a rotor 30 and a stator 40.

The crankcase 10 comprises at least a first vertical projection 11a and at least a second vertical projection 11b for fixing the stator 40. Additionally, the crankcase 10 comprises a through hole for receiving the rotating shaft 20.

Said rotating shaft 20 comprises at least one inner axial channel 21 for circulating lubricating oil, said inner axial channel 21 extending from the lower end to the upper end of said rotating shaft 20. Furthermore, the inner axial channel 21 is connected to at least one inner radial channel 22a, 22b for lubricating oil outlet, the inner axial channel 21 and the at least one inner radial channel 22a, 22b are fluidly connected to each other, so that the lubricating oil which enters the inner axial channel 21 exits through the inner radial channels 22a, 22b. In addition, the upper end of the rotating shaft 20 comprises a crankpin 23 associated with a connecting rod 24, the connecting rod 24 also being associated with a movable piston 25 within a compression cylinder 26.

The rotor 30 comprises magnets 31 and is fixed to the rotating shaft 20 by means of a first fixing arrangement 32, said first fixing arrangement 32 may comprise any known fixation arrangement (by interference, welding, adhesive, screw, among others). The fixing arrangement 32 having the function of transmitting the movement of the rotor 30 to the rotating shaft 20.

The stator 40 comprises electrical coils 41 and is fixed to the crankcase 10 by means of a second fixing arrangement 42, said second fixing arrangement 42 comprising any known fixing arrangement (by interference, welding, adhesive, screw, among others). The fixing arrangement 42 having the function of keeping the positioning of the stator 40, in relation to the crankcase 10, static.

Also according to Figure 3, the rotor 30 is disposed above the stator 40. In this condition, an axial bearing 50a is provided, used to limit the relative axial displacement between rotor 30 and stator 40 and, disposed between the lower region of the upper flange of the rotating shaft 20 and the upper region of the crankcase 10. This axial bearing 50a (which may comprise, for example, a plain sliding bearing, bearing or bushings of materials with a low friction coefficient), in addition to assisting the rotation of the rotating shaft 20, also prevents said rotating shaft 20 from undergoing axial displacements due to the magnetic attraction existing between the rotor 30 and the stator 40 when the motor is started.

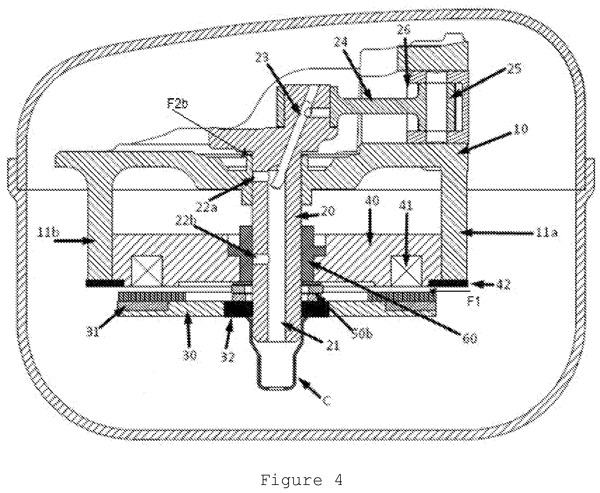

According to Figure 4, the stator 40 is above the rotor 30. In this condition, an axial bearing 50b is provided, used to limit the relative axial displacement between rotor 30 and stator 40, and disposed between the rotor 30 and the stator 40 or between the rotor 30 and the annular structure 60.

Additionally, this configuration also provides a radial bearing which, integrated with the stator 40, is arranged around the rotating shaft 20. Said radial bearing can comprise any type of bearing already known, such as, for example, a hydrodynamic bearing (bearing with some type of lubricant supply between the minimum clearance of parallel surfaces and, in this case, axially aligned) or a hydrostatic bearing (bearing with forced supply of some type of lubricant injected under pressure between two parallel surfaces and, in this case, axially aligned), or bushings of some low-friction or self-lubricating material.

According to this configuration, the general structure of the stator 40 is used to enable the formation of a radial bearing for said rotating shaft 20, so that the rotating shaft 20 does not present problems of eccentricity and misalignment.

As shown in figures 3 and 4, the radial bearing is defined by an annular structure 60 integrated with the stator 40 and arranged around the rotating shaft 20. More particularly, the annular structure 60 is arranged around a segment of the rotating shaft 20 where the inner radial channel 22a is located.

Thus, the space formed between the annular structure 60 and the rotating axis 20 segment is adapted to retain a film of lubricating oil (from the inner radial channel 22a), forming a radial hydrodynamic bearing.

Thus, by taking advantage of the stator 40 structure itself to form a hydrodynamic radial bearing for the rotating shaft 20, it is possible to build a simpler and more compact crankcase 10.

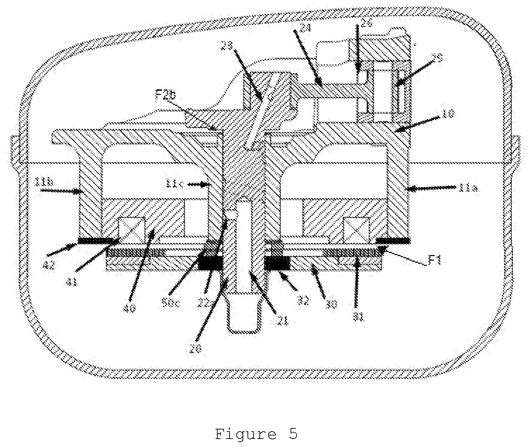

Optionally, according to Figure 5, the crankcase 10 can comprise an extended bearing hub 11c. In this configuration, the stator 40 is arranged above the rotor 30. Additionally, an axial bearing 50c is provided between the rotor 30 and the extended bearing hub 11c.

### [Second Embodiment]

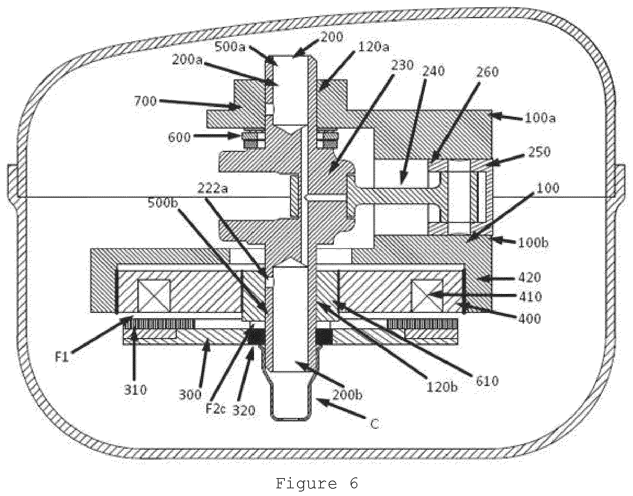

Figure 6, not part of the invention, illustrates a second embodiment of the reciprocating compressor with axial flux motor according to the present invention.

According to Figure 6, the reciprocating compressor comprises a crankcase 100, with a crankcase upper part 100a and a crankcase lower part 100b, a rotating shaft 200, with a rotating shaft first part 200a and a rotating shaft second part 200b, an oil pump C and an axial flux electric motor basically composed of a rotor 300 and a stator 400.

The crankcase 100 comprises a first through hole 120a and a second through hole 120b for receiving the rotating shaft first part 200a and the rotating shaft second part 200b respectively.

The rotating shaft 200 comprises an eccentric pin 230 disposed between the first part 200a and the second part 200b, the eccentric pin 230 being associated with a connecting rod 240, the connecting rod 240 also being associated with a movable piston 250 inside of a compression cylinder 260.

The rotor 300 comprises magnets 310 and is fixed to the rotating shaft 200 by means of a first fixing arrangement 320, said first fixing arrangement 320 can comprise any known fixation arrangement (welding, adhesive, screw, among others). The fixing arrangement 320 having the function of transmitting the movement of the rotor 300 to the rotating shaft 200.

The stator 400 comprises electrical coils 410 and is fixed to the crankcase 100 by means of a second fixation arrangement 420, said fixation arrangement 420 comprising any known fixation arrangement (welding, adhesive, screw, among others). The fixing arrangement 420 having as function to keep the positioning of the stator 400, in relation to the crankcase 100, static.

As can be seen in Figure 6, the space between the inner face of the first through hole 120a and the rotating shaft first part 200a receives a film of lubricating oil, forming a first hydrodynamic radial bearing 500a. Similarly, the space between the inner face of the second through hole 120b and the rotating shaft second part 200b also receives a film of lubricating oil, forming a second hydrodynamic radial bearing 500b. These bearings prevent premature wear of the rotating shaft 200 and of the first and second through holes 120a and 120b.

According to Figure 6, the second embodiment of the present invention provides an axial bearing 600 to keep the axial spacing between rotor 300 and stator 400 stable. Therefore, the axial bearing 600 can be mounted between the eccentric pin 230 and the crankcase upper part 100a.

Optionally, the axial bearing 600 could also be mounted between the bearing hub 700 and the rotor 300.

Additionally, the second embodiment of the present invention also provides a radial bearing which, integrated with the stator 400, is arranged around the rotating shaft 200. Said radial bearing can comprise any type of bearing already known, such as, for example, a hydrodynamic bearing (bearing with some type of lubricant supply between the minimum clearance of parallel surfaces and, in this case, axially aligned) or a hydrostatic bearing (bearing with forced supply of some type of lubricant injected under pressure between two parallel surfaces and, in this case, axially aligned), or bushings of some low-friction or self-lubricating material.

According to the present invention, the general structure of the stator 400 is used to enable the formation of a radial bearing for said rotating shaft 200, so that the rotating shaft 200 does not present problems of eccentricity and misalignment.

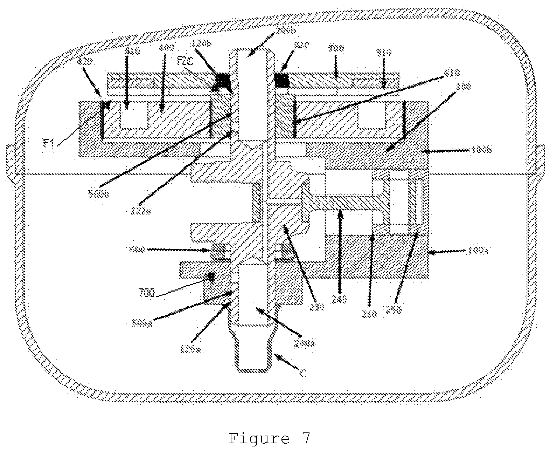

As shown in figures 6 and 7, the radial bearing is defined by an annular structure 610, no part of the invention, integrated with the stator 400 and arranged around the rotating shaft 200. More particularly, the annular structure 610 is arranged around a segment of the rotating shaft 200 where the inner radial channel 222a is located.

Thus, the space formed between the annular structure 610 and the rotating shaft 200 segment is adapted to retain a film of lubricating oil (from the inner radial channel 222a), forming a radial hydrodynamic bearing.

Figure 7, not part of the invention, illustrates an optional configuration of the second embodiment. In this configuration, the motor is above the cylinder.

### [Configurations Applicable to the First Embodiment and to the Second Embodiment]

The present invention also provides configurations applicable to the first embodiment and to the second embodiment.

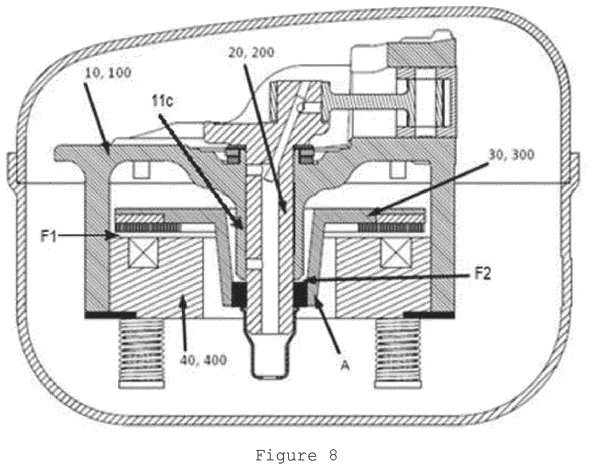

According to Figure 8, not part of the invention, in a configuration in which the rotor 30, 300 is above the stator 40, 400, the rotor 30, 300 comprises a support structure A in the form of "Z" for fixation to the rotating shaft 20, 200.

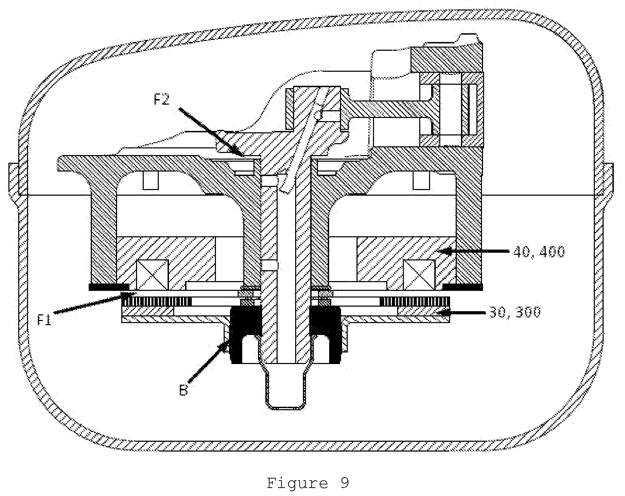

According to Figure 9, the rotor 30, 300 and stator 40, 400 can be separated by a first axial clearance F1, and the rotating shaft 20, 200 and the crankcase 10, 100 can be separated by a second axial clearance F2. The first F1 and the second F2 clearances are adjustable using a bushing B arranged between the rotor 30, 300 and the rotating shaft 20, 200. Additionally, the first clearance F1 is formed by the displacement of rotor 30, 300 over the bushing B or by the displacement of stator 40, 400 over the crankcase 10, 100, while the second clearance F2 is formed by displacing the bushing B over the rotating axis 20, 200.

The bushing B is an annular (sliding) part disposed between rotor 30, 300 and shaft 20, 200, allowing the second clearance F2 to be formed regardless of the formation of the first clearance F1.

The second clearance F2 defines a displacement field (for example, from 0.1 to 0.5mm) for the axis, preventing it from getting stuck (if F2 = 0) or with very high displacement, generating problems mainly during transport. Once the second clearance F2 is formed, the first clearance F1 (between rotor and stator) can be adjusted without changing F2.

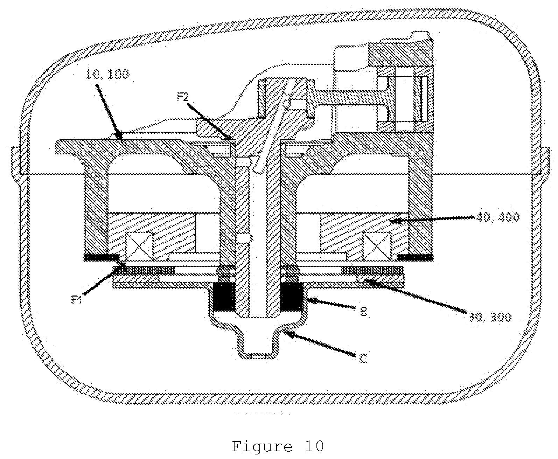

According to Figure 10, an oil pump C of frustum-conical shape can be provided in the inner axial channel 21 of the rotating shaft 20, 200 or can be provided in the rotor 30, 300. Thus, the oil intake is optimized. Additionally, the oil pump C also acts as an interface of physical contact between the rotor 30, 300 and the rotating shaft 20, 200, ensuring the fixation of these elements and transmitting the movement of the rotor 30, 300 to the rotating shaft 20, 200. The oil pump C can be fitted under interference on the rotating shaft 20, 200.

In addition to the embodiments presented above, the same inventive concept can be applied to other alternatives or possibilities of using the invention, such as, for example, in air compressors.

Although the present invention has been described in relation to certain preferred embodiments, it should be understood that it is not intended to limit the invention to those particular embodiments. On the contrary, it is intended to cover all possible alternatives, modifications and equivalences within the scope of the invention, as defined by the attached claims.

## Claims

1. Reciprocating compressor, comprising:
a crankcase (10);
a rotating shaft (20) comprising at least one inner axial channel (21), said inner axial channel (21) connected to at least one inner radial channel (22a, 22b) or to a crankpin (23);
the crankpin (23) is associated with a connecting rod (24), and the connecting rod (24) is associated with a movable piston (25) within a compression cylinder (26); and
an oil pump (C),
an axial flux electric motor comprising a rotor (30), with magnets (31), and a stator (40) with coils (41);
wherein the rotor (30) and the stator (40) are fixed to the shaft (20) and to the crankcase (10), respectively, by means of bearings or fixing arrangements;
wherein the stator (40) is located between the crankcase (10) and the rotor (30), and said rotor (30) and stator (40) are separated by a first axial clearance (F1);
wherein the shaft (20) and crankcase (10) are separated by a second lower axial clearance (F2);
**characterized in that:**
the first clearance (F1) and the second lower axial clearance (F2) are adjustable by displacing a bushing (B) disposed between the rotor (30) and the rotating shaft (20).

2. Reciprocating compressor, according to claim 1, **characterized in that** the rotor (30) is fixed to the rotating shaft (20) by means of a first fixing arrangement (32).

3. Reciprocating compressor, according to claim 1, **characterized in that** the stator (40) is fixed to the crankcase (10) by means of a second fixing arrangement (42).

4. Reciprocating compressor, according to claim 1, **characterized in that** it further comprises an axial bearing (50a) disposed between the lower region of the upper flange of the rotary shaft (20) and the upper region of the crankcase (10).

5. Reciprocating compressor, according to claim 1, **characterized in that** it further comprises an axial bearing (50b) disposed between the bushing (B) of the rotor (30) and the stator (40).

6. Reciprocating compressor, according to claim 1, **characterized in that** the stator (40) further comprises a radial bearing arranged around the rotating shaft (20), wherein the radial bearing is defined by an annular structure (60) which, projected from the stator (40), is arranged around a segment of the rotating shaft (20).

7. Reciprocating compressor, according to claim 1, **characterized in that** it further comprises an extended bearing hub (11c).

8. Reciprocating compressor, according to claim 1, **characterized in that** it further comprises an axial bearing (50c) disposed between the bushing (B) of the rotor (30) and the extended bearing hub (11c).

9. Reciprocating compressor, according to any one of the preceding claims, **characterized in that** the first clearance (F1) is formed by the displacement of the rotor (30, 300) or the stator (40,400) and the second clearance (F2b) is generated by displacing the bushing (B).

10. Reciprocating compressor, according to any one of the preceding claims, **characterized in that** it comprises an oil pump (C) with a frustum-conical shape provided in the inner axial channel (21) of the rotating shaft (20, 200); or provided in the rotor (30, 300).

## Patentansprüche

1. Hubkolbenverdichter, der Folgendes umfasst:
ein Kurbelgehäuse (10),
eine drehende Welle (20), die mindestens einen inneren axialen Kanal (21) umfasst, wobei der innere axiale Kanal (21) mit mindestens einem inneren radialen Kanal (22a, 22b) oder mit einem Kurbelzapfen (23) verbunden ist;
der Kurbelzapfen (23) ist mit einer Verbindungsstange (24) verbunden, und die Verbindungsstange (24) ist mit einem beweglichen Kolben (25) in einem Verdichtungszylinder (26) verbunden; und
eine Ölpumpe (C),
einen Scheibenläufer-Elektromotor, der einen Rotor (30) mit Magneten (31) und einen Stator (40) mit Spulen (41) umfasst;
wobei der Rotor (30) und der Stator (40) an der Welle (20) beziehungsweise am Kurbelgehäuse (10) über Lager oder Befestigungsanordnungen befestigt sind;
wobei der Stator (40) sich zwischen dem Kurbelgehäuse (10) und dem Rotor (30) befindet und der Rotor (30) und der Stator (40) durch einen ersten axialen Zwischenraum (F1) getrennt sind;
wobei die Welle (20) und das Kurbelgehäuse (10) durch einen zweiten, unteren axialen Zwischenraum (F2) getrennt sind;
**dadurch gekennzeichnet, dass**
der erste Zwischenraum (F1) und der zweite, untere axiale Zwischenraum (F2) durch Verschieben einer Buchse (B), die zwischen dem Rotor (30) und der drehenden Welle (20) angeordnet ist, verstellbar sind.

2. Hubkolbenverdichter gemäß Anspruch 1, **dadurch gekennzeichnet, dass** der Rotor (30) an der drehenden Welle (20) über eine erste Befestigungsanordnung (32) befestigt ist.

3. Hubkolbenverdichter gemäß Anspruch 1, **dadurch gekennzeichnet, dass** der Stator (40) am Kurbelgehäuse (10) über eine zweite Befestigungsanordnung (42) befestigt ist.

4. Hubkolbenverdichter gemäß Anspruch 1, **dadurch gekennzeichnet, dass** er weiter ein Axiallager (50a) umfasst, angeordnet zwischen dem unteren Teil des oberen Flanschs der drehenden Welle (20) und dem oberen Teil des Kurbelgehäuses (10) .

5. Hubkolbenverdichter gemäß Anspruch 1, **dadurch gekennzeichnet, dass** er weiter ein Axiallager (50b) umfasst, angeordnet zwischen der Buchse (B) des Rotors (30) und dem Stator (40).

6. Hubkolbenverdichter gemäß Anspruch 1, **dadurch gekennzeichnet, dass** der Stator (40) weiter ein Radiallager umfasst, das um die drehende Welle (20) herum angeordnet ist, wobei das Radiallager durch eine Ringstruktur (60) bestimmt ist, welche, vom Stator (40) vorstehend, um ein Segment der drehenden Welle (20) herum angeordnet ist.

7. Hubkolbenverdichter gemäß Anspruch 1, **dadurch gekennzeichnet, dass** er weiter eine verlängerte Lagernabe (11c) umfasst.

8. Hubkolbenverdichter gemäß Anspruch 1, **dadurch gekennzeichnet, dass** er weiter ein Axiallager (50c) umfasst, das zwischen der Buchse (B) des Rotors (30) und der verlängerten Lagernabe (11c) angeordnet ist.

9. Hubkolbenverdichter gemäß einem beliebigen der obigen Ansprüche, **dadurch gekennzeichnet, dass** der erste Zwischenraum (F1) durch Verschiebung des Rotors (30, 300) oder des Stators (40, 400) gebildet wird und der zweite Zwischenraum (F2b) durch Verschiebung der Buchse (B) gebildet wird.

10. Hubkolbenverdichter gemäß einem beliebigen der obigen Ansprüche, **dadurch gekennzeichnet, dass** er eine Ölpumpe (C) mit Kegelstumpfform umfasst, angebracht im inneren axialen Kanal (21) der drehenden Welle (20, 200) oder im Rotor (30, 300).

## Revendications

1. Compresseur alternatif, comprenant:
un carter (10);
un arbre rotatif (20) comprenant au moins un canal axial intérieur (21), ledit canal axial intérieur (21) étant relié à au moins un canal radial intérieur (22a, 22b) ou à un maneton (23);
le maneton (23) étant associé à une bielle de connexion (24), et la bielle de connexion (24) étant associée à un piston mobile (25) à l'intérieur d'un cylindre de compression (26); et
une pompe à huile (C),
un moteur électrique à flux axial comprenant un rotor (30), avec des aimants (31), et un stator (40) avec des bobines (41);
dans lequel le rotor (30) et le stator (40) sont fixés à l'arbre (20) et au carter (10), respectivement, au moyen de paliers ou de dispositifs de fixation;
dans lequel le stator (40) est situé entre le carter (10) et le rotor (30), et ledit rotor (30) et stator (40) sont séparés par un premier espace intermédiaire axial (Fl);
dans lequel l'arbre (20) et le carter (10) sont séparés par un second espace intermédiaire axial inférieur (F2)
**caractérisé par le fait que:**
le premier espace intermédiaire (Fl) et le second espace intermédiaire axial inférieur (F2) sont réglables en déplaçant une douille (B) disposée entre le rotor (30) et l'arbre rotatif (20).

2. Compresseur alternatif, selon la revendication 1, **caractérisé par le fait que** le rotor (30) est fixé à l'arbre rotatif (20) au moyen d'un premier dispositif de fixation (32).

3. Compresseur alternatif, selon la revendication 1, **caractérisé par le fait que** le stator (40) est fixé au carter (10) au moyen d'un deuxième dispositif de fixation (42).

4. Compresseur alternatif, selon la revendication 1, **caractérisé par le fait qu'**il comprend en outre un palier axial (50a) disposé entre la région inférieure de la bride supérieure de l'arbre rotatif (20) et la région supérieure du carter (10).

5. Compresseur alternatif, selon la revendication 1, **caractérisé par le fait qu'**il comprend en outre un palier axial (50b) disposé entre la douille (B) du rotor (30) et le stator (40).

6. Compresseur alternatif, selon la revendication 1, **caractérisé par le fait que** le stator (40) comprend en outre un palier radial disposé autour de l'arbre rotatif (20), le palier radial étant défini par une structure annulaire (60) qui, projetée à partir du stator (40), est disposée autour d'un segment de l'arbre rotatif (20).

7. Compresseur alternatif, selon la revendication 1, **caractérisé par le fait qu'il** comprend en outre un moyeu de palier étendu (llc).

8. Compresseur alternatif, selon la revendication 1, **caractérisé par le fait qu'**il comprend en outre un palier axial (50c) disposé entre la douille (B) du rotor (30) et le moyeu de palier étendu (llc).

9. Compresseur alternatif, selon l'une quelconque des revendications précédentes, **caractérisé par le fait que** le premier espace intermédiaire (Fl) est formé par le déplacement du rotor (30, 300) ou du stator (40, 400) et le second espace intermédiaire (F2b) est généré par le déplacement de la douille (B).

10. Compresseur alternatif, selon l'une quelconque des revendications précédentes, **caractérisé par le fait qu'**il comprend une pompe à huile (C) de forme tronconique placée dans le canal axial intérieur (21) de l'arbre rotatif (20, 200); ou placée dans le rotor (30, 300).
